Europäisches Patentamt

European Patent Office

Office européen des brevets

(19)

(11) Publication number: 0 198 785
A2

# (12) EUROPEAN PATENT APPLICATION

(21) Application number: 86630050.2

(22) Date of filing: 03.04.86

(51) Int. Cl.⁴: B23P 19/02 , //G01L5/00

(30) Priority: 08.04.85 US 721062

(43) Date of publication of application:
22.10.86 Bulletin 86/43

(84) Designated Contracting States:
DE FR GB IT SE

(71) Applicant: BELOIT CORPORATION
P.O. Box 350
Beloit Wisconsin 53511(US)

(72) Inventor: Goldenberg, Philip Henry
101 Asci Dr.
Pittsfield, MA(US)

(74) Representative: Schmitz, Jean-Marie et al
Office Dennemeyer S.à.r.l. 21-25 Allée
Scheffer P.O. Box 41
L-2010 Luxembourg(LU)

(54) Method and apparatus for installing a high consistency refiner head.

(57) A method and an apparatus provide for accurate positioning of a refiner head 10, having a tapered bore 14, on a tapered section 16 of a mating shaft 12. A circumferentially -mounted strain gauge 20 is provided on the internal surface of a recess 18 of the bore 14 and the amount of interference, in terms of hoop strain, between the shaft 12 and the refiner head 10 is measured to determine a precise interference between the refiner head 10 and the shaft 12.

EP 0 198 785 A2

The present invention relates to a method and apparatus for mounting a plate-like structure on a shaft, and is more particularly concerned with a method and apparatus for installing a refining head and a shaft of a high consistency refiner.

In a high consistency refiner, the fit of the shaft to a large refining head must be controlled to ensure proper interference for transmitting large amounts of torque and to maintain a required squareness of the refining surfaces. The amount of interference must also be adequate to account for the enlargement of the bore of the refiner head due to centrifugal forces at running speeds.

Heretofore, the fit has been provided during refiner manufacturing in two ways. In the first technique, a straight fit was employed with a calculated amount of interference fit and a key/keyway engagement. A shoulder at the end of the fit also controlled the axial placement of the head on the shaft. The primary problem with this method is that removal of the refiner head from the shaft, as required by normal maintenance procedures, becomes very difficult. The outer rim of the refiner head must be heated in order to expand the bore of the head away from the shaft. It is difficult to determine when the desired clearance has been reached to promote removal of the refiner head with this type of procedure. Therefore, many problems have been encountered in which the head has become stuck to the shaft, gauling the two surfaces, and making removal almost impossible without causing irreparable damage to the assembly.

The second procedure is to use a tapered fit of the refiner head and shaft. A problem then arises as how to determine the proper amount of interference. An insufficient amount of interference may cause the head to lose its surface squareness or become loose during running conditions, therefore causing a safety hazard. Too much interference may cause problems during disassembly of the parts, similar to that for the straight fit. Methods for properly installing a refiner head have varied from one manufacturer to another; however, a fail-safe method for properly locating the refiner head with respect to a known interference has not been developed. Most methods recommend exerting a known force against the head in the axial direction, using a large hydraulic jack. However, given the wide variation of static friction coefficients, for example 0.78 (dry) to 0.0051 (greasy), for steel on steel as specified in "Mark's Standard Handbook for Mechanical Engineers, 8th Ed.", large differences in resultant interferences can occur using this method.

The object of the present invention is to provide a method and an apparatus for properly installing a refiner head, having a tapered bore, on a mating shaft, having a tapered section.

According to the invention, a circumferentially mounted strain gauge is provided on an internal surface within a recess in a head bore, which, when attached to a strain indicator, reads the hoop strain of the refiner head, and subsequently the amount of interference between the shaft and the refiner head, as the shaft and the refiner head are pressed together. This technique provides a precise amount of assembly interference of these two parts.

More specifically, the above solution utilizes a circumferentially-mounted strain gauge on a small relief or recess in the bore of the refiner head. The strain gauge measures hoop strain which may be related to the average amount of interference between the two parts. The operation of the press fitting of the refiner head onto the refiner shaft causes the bore of the refiner head to increase and the diameter of the shaft to shrink. These changes in dimension show up as strain in the material which may be directly measured with a strain gauge. The relationship between the amount of measured circumferential or hoop strain and the desired amount of interference fit may be expressed as

$$\epsilon_t = \sigma_t/E = (\Delta/4a)\,1 + (a^2/b^2)$$

where

$\epsilon_t$ = hoop strain;

$\sigma_t$ = hoop stress;

E = modulous of elasticity;

$\Delta$ = amount of diametrical interference;

a = inner radius of head bore; and

b = outer radius of the head.

Other objects, features and advantages of the invention, its organization, construction and operation will be best understood from the following detailed description, taken in conjunction with the accompanying drawings, on which:

Fig. 1 is a fragmentary sectional view of a refiner head mounted on a refiner shaft in accordance with the present invention ;

Fig. 2 is a fragmentary sectional view taken

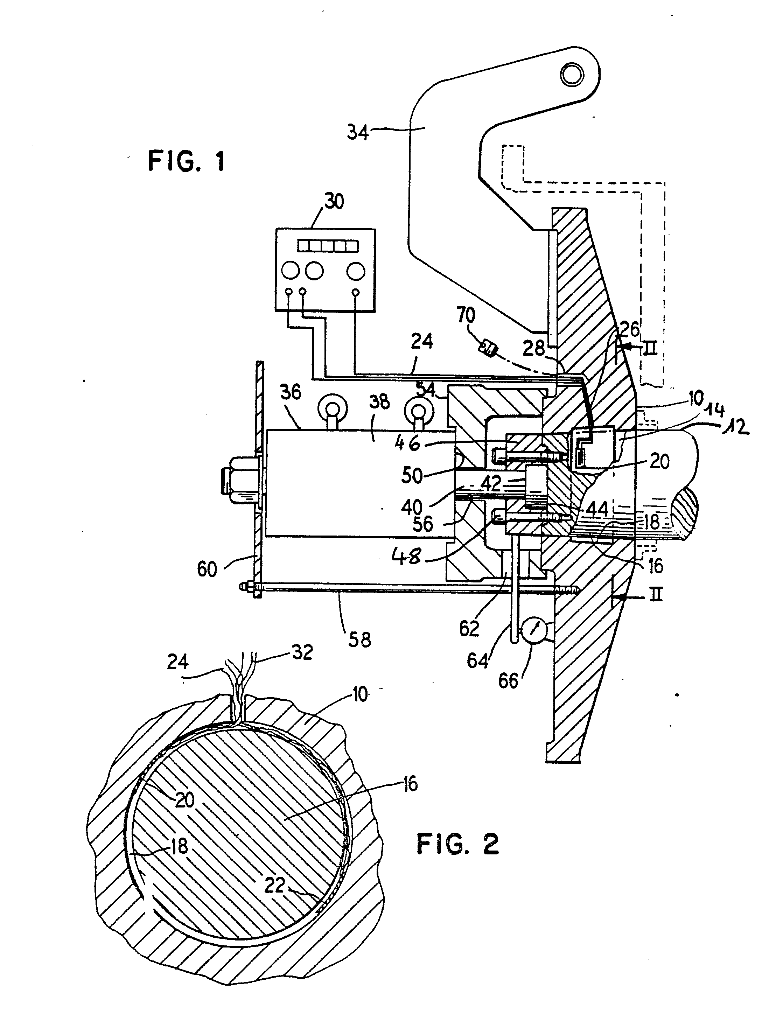

along the line II--II of Fig. 1; and

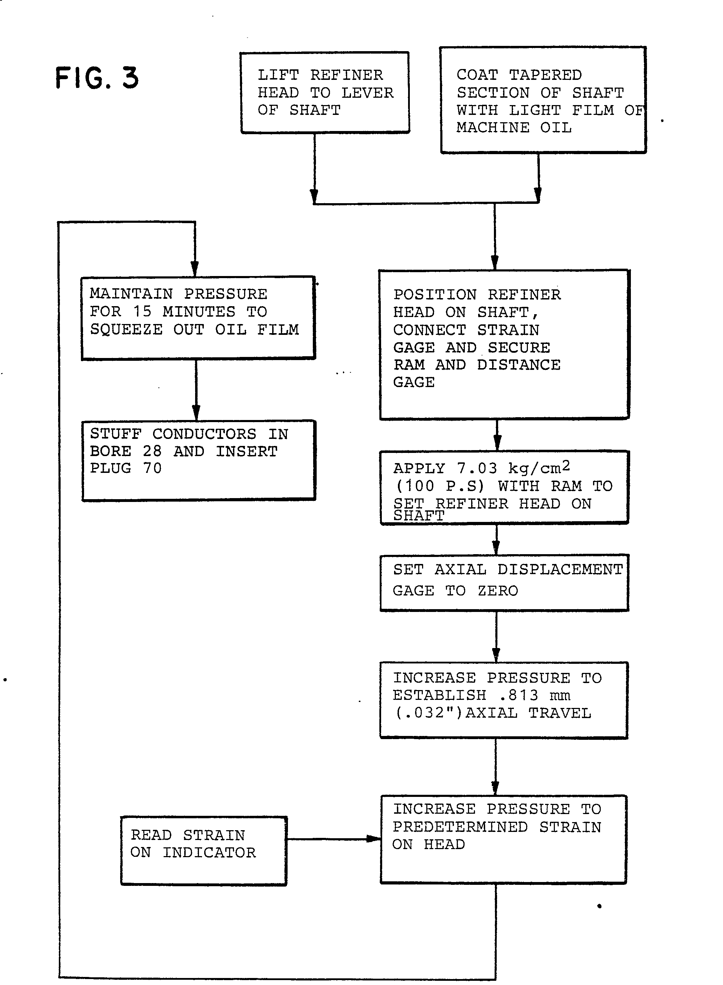

Fig. 3 is a flow chart of the method of the present invention.

Referring to Fig. 1, a refiner head 10 is illustrated mounted on a refiner shaft 12. The refiner head 10 includes a tapered bore 14 and the refiner shaft 12 comprises a complementary shaped end 16. The bore 14 comprises an annular recess 18 in which, as best seen in Fig. 2, two strain gauges 20 and 22 are diametrically mounted.

As seen in Fig. 1, the strain gauge 20 is connected by way of electrical conductors 24 to a strain indicator 30, such as may be provided by Northern Technical Service, Inc., Model 5210 Digital Strain Indicator. Alternatively, the strain gauge 22 could be so connected by way of conductors 32. The conductors extend through a pair of intersecting bores 26,28 in the refiner head 10. The strain for a refiner head having bore of 20.32 cm (8 inches), will be, for example , $100 \times 10^{-6}$ cm/cm - (100 microstrain or $100 \times 10^{-6}$"/").

As seen, the refiner head may be lifted up to the level of the shaft by way of a hoist attached to a removable element 34.

A hydraulic ram 36 comprises a hydraulic cylinder 38 and an extensible/retractable member 40 and serves for the application of pressure to the refiner head 10 with respect to the shaft 12. As shown, the extensible/retractable member 40 has an enlarged distal end with a shoulder 42 which bears against a shoulder 44 of a cap-like structure 46 which is secured to the end face of the shaft 12 by way of a plurality of screws 48. Therefore, as pressure is applied to retract the shaft 40, the extensible member 42 applies a pulling force to the end of the shaft 12. At the same time, the forward face 50 of the cylinder 38 acts against the end face 52 of the refiner head 10 by way of a pressure element 54 which includes a bore 56 receiving the extensible/retractable member 40 therethrough.

As shown in Fig.1, a threaded rod 58 is secured to the refiner disk 10 and to a plate 60 and supports the left-hand end of the cylinder 38.

The pressure element 54 all includes a bore 62 which receives a radial projection 64 connected to the element 46. An axial displacement gauge 66 is mounted between the projection 64 and the end face of the refiner disk 10 and will provide a reading of axial displacement for which, for example, 1 revolution of the dial is equal to 2.54 mm (1/10").

Turning now to Fig. 3, the method of installing a refiner head according to the present invention is illustrated. As indicated, the tapered section of the shaft is coated with a light film of machine oil either before or after the refiner head has been lifted to the level of the shaft. The refiner head is then positioned on the shaft, the strain gauge is connected and the ram and distance gauge are put in place and connected.

During the next step, a pressure of 7.03 kg/cm² (100 P.S.I.) is applied by the ram to set the refiner head on the shaft. Next, the axial displacement gauge 66 is set to zero and the pressure is then increased to establish a 0.813 mm (0.032") axial travel of the refiner head with respect to the shaft.

The pressure is then again increased while the strain indicator 30 is read to establish a predetermined strain on the head, such as the $100 \times 10^{-6}$ cm/cm (100 microstrain) mentioned above.

After reaching the predetermined strain, the pressure is maintained for a predetermined time interval, for example 15 minutes, to squeeze out the film of oil.

The strain gauges may be affixed by epoxy or, preferably, by welding. Two strain gauges have been provided in the illustration of Fig. 2 as a redundant installation in case one strain gauge becomes damaged. However, two strain gauges may be read or, for example, four strain gauges may be provided in diametrically opposed pairs and connected in a bridge configuration for reading by the strain indicator. When a single strain gauge is connected to the strain indicator a standard one-quarter bridge connection is employed as illustrated in Fig. 1.

After installation of the refiner head , the conductors are disconnected from the strain indicator and stuffed into the bore 28 which is then plugged with a threaded plug 70.

Although we have described our invention by reference to particular illustrative embodiments thereof, many changes and modifications of the invention may become apparent to those skilled in the art without departing from the spirit and scope of the invention. We therefore intend to include within the patent warranted hereon all such changes and modifications as may reasonably and properly be included within the scope of our contribution to the art.

**Claims**

1. A method for mounting an element having a tapered bore on a shaft having a tapered section complemental to the bore, comprising the steps of :

(a) moving the element to receive the tapered section of the shaft within the tapered bore ;

(b) applying pressure to the element to force the same onto the shaft while contemporaneously measuring the strain on the element adjacent the shaft; and

(c) removing the applied pressure after achieving a predetermined stress on the element.

2. The method of claim 1, and further comprising the step of :

(d) coating the tapered section of the shaft with a lubricant prior to moving the element onto the shaft.

3. The method of claim 2, wherein the step (b) of applying pressure to the element is further defined as :

    (b1) applying a predetermined pressure to the element to set the element on the shaft;

    (b2) increasing the applied pressure to establish a predetermined fit of the element on the shaft;

    (b3) further increasing the pressure until the predetermined strain is measured; and

    (b4) holding the further increased pressure for a predetermined time interval to squeeze out the film of lubricant.

4. The method of claim 3, wherein : the step (b1) of applying a predetermined pressure to the element is further defined as setting a zero location of the axial movement of the element with respect to the shaft; and

the step (b2) of increasing pressure to establish a predetermined fit of the element on the shaft is further defined as measuring, from the zero location, the axial movement of the element with respect to the shaft to a predetermined distance.

5. A method for mounting a refiner head, including a tapered bore, on a shaft which includes a tapered section, comprising the steps of :

    (a) positioning the tapered bore onto the tapered section of the shaft;

    (b) applying a predetermined pressure to the refiner head to set the head on the shaft;

    (c) setting an axial displacement gauge to zero upon reaching the predetermined pressure;

    (d) increasing the applied pressure while measuring the axial displacement of the head from the zero location until attaining a predetermined displacement ;

    (e) sensing the strain on the refiner head; and

    (f) further increasing the applied pressure until a predetermined strain is sensed.

6. A method for mounting a refiner head, including a tapered bore, on a shaft which includes a tapered section, comprising the steps of:

    (a) coating the tapered section with a film of machine oil;

    (b) positioning the tapered bore of the refiner head onto the tapered section of the shaft;

    (c) applying a predetermined pressure to the refiner head to seat the refiner head on the shaft , and

    (c1) setting an axial displacement gauge to zero after applying the predetermined pressure;

    (d) increasing the applied pressure while (d1) measuring the axial displacement until reaching a predetermined axial displacement;

    (e) measuring the strain on the refiner head adjacent the shaft while

    (e1) further increasing the pressure on the refiner head; and

    (f) holding the increased pressure on the refiner head upon reaching a predetermined strain for a predetermined interval to squeeze out the film of lubricant.

7. In combination, a shaft including a tapered section; a refiner head including a body, a tapered bore through said body complemental to said tapered section; a recess in said bore defining first and second axially-spaced head sections; positioning means for positioning said bore onto said tapered section; a distance gauge for measuring the axial displacement of said refiner head along said shaft with respect to a datum; at least one strain gauge secured to said refiner head in said recess between said first and second head sections; a strain indicator connected to said at least one strain gauge for measuring strain; and pressure means coupled to said refiner head and to said shaft, said pressure means operable to force said refiner head onto said tapered section of said shaft in a plurality of modes terminated in response to a predetermined strain.

8. The combination of claim 7, wherein : said refiner head comprises means defining a passageway between the exterior of said head and said recess; and

a plurality of electrical conductors extend through said passageway between said strain gauge and said strain indicator.

9. The combination of claim 8, and further comprising: a plug to close said passageway with said electrical conductors disconnected from said strain indicator and stuffed in said passageway.

10. The combination of claim 7, wherein : said pressure means comprises a hydraulic ram device including a hydraulic cylinder and an extensible/retractable member connected to the end of said shaft; and a bracket bearing against said cylinder and said refiner head.

11. The combination of claim 7, and further comprising : attachment means securing said ram to said shaft, said attachment means including a projection, said distance gauge mounted between said projection and said refiner head.

12. The combination of claim 7, and further comprising : means attaching said pressure means to said refiner head.

13. The combination of claim 7, and further comprising: weld means mounting said strain gauge in said recess.

14. In combination, a refiner head including a tapered central bore, recess means defining a circular recess in said central and passageway means defining a passageway communicating said recess with the exterior of said refiner head; a shaft including a tapered section complemental to the shape of said tapered central bore to be received in said bore ; a strain gauge mounted in said recess and electrical conductors connected to said strain gauge and extending out of said refiner head through said passageway for measuring the strain on said refiner head; a hydraulic ram including a hydraulic cylinder including first and second ends, and an extensible/retractable member, said cylinder connected to said refiner head; a pressure member mounted between said first end of said cylinder and said refiner head for transmitting pressure to said refiner head upon retraction of said extensible/retractable member; a pulling member connecting said extensible/retractable member to said shaft; and an axial distance gauge connected between said pulling member and said refiner head.

0 198 785

**FIG. 1**

**FIG. 2**

FIG. 3

LIFT REFINER
HEAD TO LEVER
OF SHAFT

COAT TAPERED
SECTION OF SHAFT
WITH LIGHT FILM OF
MACHINE OIL

MAINTAIN PRESSURE
FOR 15 MINUTES TO
SQUEEZE OUT OIL FILM

POSITION REFINER
HEAD ON SHAFT,
CONNECT STRAIN
GAGE AND SECURE
RAM AND DISTANCE
GAGE

STUFF CONDUCTORS IN
BORE 28 AND INSERT
PLUG 70

APPLY 7.03 kg/cm$^2$
(100 P.S) WITH RAM TO
SET REFINER HEAD ON
SHAFT

SET AXIAL DISPLACEMENT
GAGE TO ZERO

INCREASE PRESSURE TO
ESTABLISH .813 mm
(.032")AXIAL TRAVEL

READ STRAIN
ON INDICATOR

INCREASE PRESSURE TO
PREDETERMINED STRAIN
ON HEAD